(19) Europäisches Patentamt
European Patent Office
Office européen des brevets

(11) EP 1 130 967 B1

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **99972495.8**

(22) Anmeldetag: **06.11.1999**

(51) Int Cl.[7]: **A01N 47/24**
// A01N47:24, A01N59:20

(86) Internationale Anmeldenummer:
**PCT/EP99/08512**

(87) Internationale Veröffentlichungsnummer:
**WO 00/030450 (02.06.2000 Gazette 2000/22)**

# (54) Fungizide Mischungen

Fungicidal mixtures

Mélanges fongicides

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **19.11.1998 DE 19853503**

(43) Veröffentlichungstag der Anmeldung:
**12.09.2001 Patentblatt 2001/37**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUR, Reinhold**
  **D-67459 Böhl-Iggelheim (DE)**
- **SAUTER, Hubert**
  **D-68305 Mannheim (DE)**
- **MÜLLER, Bernd**
  **D-67227 Frankenthal (DE)**
- **BIRNER, Erich**
  **D-67317 Altleiningen (DE)**
- **LEYENDECKER, Joachim**
  **D-68326 Ladenburg (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 741 970**
**WO-A-96/03047**
**WO-A-97/15189**
**WO-A-98/41094**
**WO-A-98/53693**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 130 967 B1

## Beschreibung

Die vorliegende Erfindung betrifft eine fungizide Mischung, welche

a.1) ein Carbamat der Formel I.a,

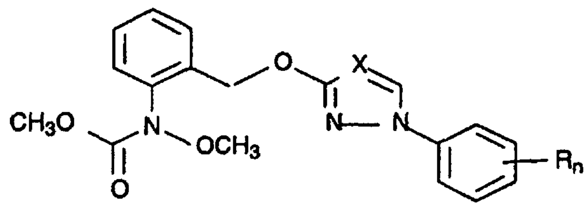

I.a

in der X für CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht,
sowie

b) einen Kupfer-haltigen fungiziden Wirkstoff (II) ausgewählt aus der Gruppe Kupferhydroxid, Kupferoxid, Kupferoxychlorid-sulfat, Kupfersulfat, Oxine-Kupfer, Kupfer-bis-(3-phenylsalicylat), Kupfer-dihydrazinium-disulfat, Dikupferchlorid-trihydroxid und Trikupfer-dichlorid-dimethyldithiocarbamat.

in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindungen II zur Herstellung derartiger Mischungen.

Die Verbindungen der Formel I, ihre Herstellung und ihre Wirkung gegen Schadpilze ist aus der Literatur bekannt (WO-A 96/01,256; WO-A 96/01,258).

Ebenfalls bekannt ist die Verwendung von Kupfer-haltigen Verbindungen zur Bekämpfung von Schadpilzen (WO-A 97/15189 und EP-A 741970).

Die synergistische Wirkung von Strobilurinen in Verbindung mit Herbiziden (WO-A 98/41094) und in Verbindung mit Fungiziden aus der Klasse der Anilide (WO-A 96/03047) ist bereits bekannt.

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I und der Verbindung II oder bei Anwendung der Verbindung I und der Verbindungen II nacheinander Schadpilze besser bekämpfen lassen, als mit den Einzelverbindungen allein.

Die Formel I.a repräsentiert insbesondere Carbamate, in denen die Kombination der Substituenten einer Zeile der folgenden Tabelle entspricht:

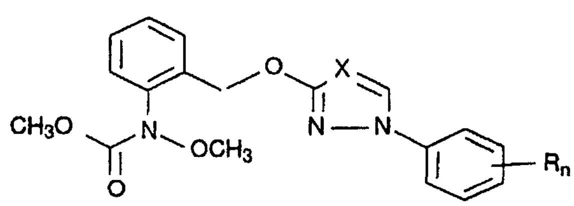

I.a

| Nr. | X | $R_n$ |
|---|---|---|
| I.1 | N | 2-F |
| I.2 | N | 3-F |
| I.3 | N | 4-F |

(fortgesetzt)

| Nr. | X | $R_n$ |
|---|---|---|
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | $2\text{-}CH_3$ |
| I.11 | N | $3\text{-}CH_3$ |
| I.12 | N | $4\text{-}CH_3$ |
| I.13 | N | $2\text{-}CH_2CH_3$ |
| I.14 | N | $3\text{-}CH_2CH_3$ |
| I.15 | N | $4\text{-}CH_2CH_3$ |
| I.16 | N | $2\text{-}CH(CH_3)_2$ |
| I.17 | N | $3\text{-}CH(CH_3)_2$ |
| I.18 | N | $4\text{-}CH(CH_3)_2$ |
| I.19 | N | $2\text{-}CF_3$ |
| I.20 | N | $3\text{-}CF_3$ |
| I.21 | N | $4\text{-}CF_3$ |
| I.22 | N | $2,4\text{-}F_2$ |
| I.23 | N | $2,4\text{-}Cl_2$ |
| I.24 | N | $3,4\text{-}Cl_2$ |
| I.25 | N | $2\text{-}Cl, 4\text{-}CH_3$ |
| I.26 | N | $3\text{-}Cl, 4\text{-}CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| Nr. | X | $R_n$ |
| I.34 | CH | 3-Br |
| I.35 | CH | 4-Br |
| I.36 | CH | $2\text{-}CH_3$ |
| I.37 | CH | $3\text{-}CH_3$ |
| I.38 | CH | $4\text{-}CH_3$ |
| I.39 | CH | $2\text{-}CH_2CH_3$ |
| I.40 | CH | $3\text{-}CH_2CH_3$ |

(fortgesetzt)

| Nr. | X | $R_n$ |
|---|---|---|
| I.41 | CH | 4-$CH_2CH_3$ |
| I.42 | CH | 2-$CH(CH_3)_2$ |
| I.43 | CH | 3-$CH(CH_3)_2$ |
| I.44 | CH | 4-$CH(CH_3)_2$ |
| I.45 | CH | 2-$CF_3$ |
| I.46 | CH | 3-$CF_3$ |
| I.47 | CH | 4-$CF_3$ |
| I.48 | CH | 2,4-$F_2$ |
| I.49 | CH | 2,4-$Cl_2$ |
| I.50 | CH | 3,4-$Cl_2$ |
| I.51 | CH | 2-Cl, 4-$CH_3$ |
| I.52 | CH | 3-Cl, 4-$CH_3$ |

Besonders bevorzugt werden die Verbindungen I.12, I.23, I.32 und I.38.

Die Verbindungen I sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Als Kupfer-haltige fungizide Wirkstoffe (II) eignen sich im allgemeinen die bekannten handelsüblichen Fungizide. Insbesondere geeignet sind Kupfer-haltige Fungizide aus der Gruppe Kupferhydroxid, Kupferoxid, Kupferoxychlorid-sulfat, Kupfersulfat, Oxine-Kupfer, Kupfer-bis-(3-phenylsalicylat), Kupfer-dihydrazinium-disulfat, Dikupferchlorid-trihydroxid und Trikupfer-dichlorid-dimethyldithiocarbamat.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis

und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 1:1 bis 1:1000, vorzugsweise 1:1 bis 1:100, insbesondere 1:3 bis 1:10 angewendet.

Die Aufwandmengen der erfindungsgemäßen Mischungen liegen, vor allem bei landwirtschaftlichen Kulturflächen, je nach Art des gewünschten Effekts bei 0,01 bis 5 kg/ha, vorzugsweise 0,05 bis 3,5_kg/ha, insbesondere 0,1 bis 2,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,1 bis 10 kg/ha, vorzugsweise 0,5 bis 5 kg/ha, insbesondere 0,5 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe ) werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen,

Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel**

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Wirkung gegen *Phytophthora infestans* (Krautfäule)

Blätter von Topfpflanzen der Sorte "Große Fleischtomate" wurden mit einer wäßrigen Suspension, die aus einer Stammlösung aus 10 % Wirkstoff, 63 % Cyclohexanon.und 27 % Emulgiermittel angesetzt wurde, bis zur Tropfnässe besprüht. Am folgenden Tag wurden die Blätter mit einer wäßrigen Zoosporenaufschwemmung von *Phytophthora infestans* infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (1 - \alpha/\beta)\cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Die Ergebnisse sind den nachfolgenden Tabellen 2 und 3 zu entnehmen.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | Verbindung I.32 | 2 | 80 |
| | | 1 | 30 |
| | | 0,5 | 30 |
| | | 0,25 | 0 |

Tabelle 2 (fortgesetzt)

| Bsp. | Wirkstoff | Wirkstoffkonzentration in der Spritzbrühe in ppm | Wirkungsgrad in % der unbehandelten Kontrolle |
|---|---|---|---|
| 3V | II.1 = Cuproxat dreibasisches Kupfersulfat | 100 | 10 |
| | | 50 | 0 |
| | | 25 | 0 |
| | | 12,5 | 0 |

Tabelle 3

| Bsp. | erfindungsgemäße Mischungen | beobachteter Wirkungsgrad | berechneter Wirkungsgrad*) |
|---|---|---|---|
| 4 | 1 ppm I.32 + 100 ppm II.1 (Mischung 1 : 100) | 95 | 37 |
| 5 | 0,5 ppm I.32 + 50 ppm II.1 (Mischung 1 : 100) | 80 | 30 |
| 6 | 0,25 ppm I.32 + 25 ppm II.1 (Mischung 1 : 100) | 50 | 0 |
| 7 | 2 ppm I.32 + 100 ppm II.1 (Mischung 1 : 50) | 97 | 82 |
| 8 | 1 ppm I.32 + 50 ppm II.1 (Mischung 1 : 50) | 95 | 30 |
| 9 | 0,5 ppm I.32 + 25 ppm II.1 (Mischung 1 : 50) | 93 | 30 |
| 10 | 2 ppm I.32 + 50 ppm II.1 (Mischung 1 : 25) | 100 | 80 |
| 11 | 1 ppm I.32 + 25 ppm II.1 (Mischung 1 : 25) | 97 | 30 |
| 12 | 0,5 ppm I.32 + 12,5 ppm II.1 (Mischung 1 : 25) | 97 | 30 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad.

Anwendungsbeispiel 2 - Wirksamkeit gegen Phytophthora infestans an Tomaten**

Blätter von Topfpflanzen der Sorte "Große Fleischtomate St. Pierre" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer kalten wäßrigen Zoosporenauf-schwemmung von Phytophthora infestans mit einer Dichte von 0.25 x $10^6$ Sporen/ml infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Als Komponente II wurde dreibasisches Kupfersulfat $3Cu(OH)_2$ x $CuSO_4$ (unter dem Handelsnamen Cuproxat kommerziell erhältlich) eingesetzt.

Die Ergebnisse der Versuche sind den nachstehenden Tabellen 4 und 5 zu entnehmen:

Tabelle 4:

| Bsp. | Wirkstoff | Konz. in ppm | Wirkungsgrad in % der unbeh. Kontrolle |
|---|---|---|---|
| 13V | ohne | (87 % Befall) | 0 |
| 14V | Verbindung I.23 | 2<br>1<br>0,5<br>0,25<br>0,125 | 8<br>0<br>0<br>8<br>0 |
| 15V | Verbindung I.38 | 2<br>1<br>0,5 | 0<br>0<br>8 |
| 16V | Verbindung II | 200<br>100<br>50<br>25<br>12,5 | 8<br>8<br>8<br>8<br>0 |

Tabelle 5:

| Bsp. | erfindungsgemäße Mischung (Konz. in ppm) | beobachteter Wirkungsgrad | berechneter Wirkungsgrad* |
|---|---|---|---|
| 17 | 2 ppm I.23 + 200 ppm II | 54 | 15 |
| 18 | 1 ppm I.23 + 100 ppm II | 42 | 8 |
| 19 | 0,125 ppm I.23 + 12,5 ppm II | 31 | 0 |
| 20 | 2 ppm I.23 + 100 ppm II | 31 | 15 |
| 21 | 2 ppm I.38 + 200 ppm II | 77 | 8 |
| 22 | 1 ppm I.38 + 100 ppm II | 42 | 8 |
| 23 | 2 ppm I.38 + 100 ppm II | 77 | 8 |
| 24 | 1 ppm I.38 + 50 ppm II | 31 | 8 |
| 25 | 2 ppm I.38 + 50 ppm II | 65 | 8 |
| 26 | 1 ppm I.38 + 25 ppm II | 54 | 8 |
| 27 | 0,5 ppm I.38 + 12,5 ppm II | 29 | 8 |

* berechnet nach der Colby-Formel

Aus den Ergebnissen der Versuche geht hervor, daß der beobachtete Wirkungsgrad in allen Mischungsverhältnissen höher ist als der nach der Colby-Formel vorausberechnete Wirkungsgrad.

****** Die Anwendungsbeispiele sind nicht erfindungsgemäß

## Patentansprüche

**1.** Fungizide Mischung, enthaltend

a.1) ein Carbamat der Formel I.a,

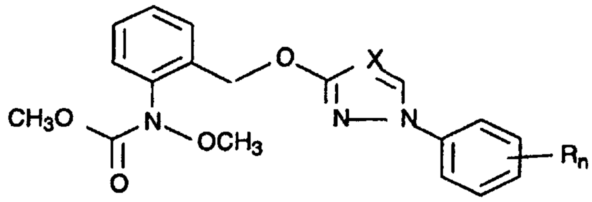

I.a

in der X für CH und N steht, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht,
und

b) einen Kupfer-haltigen fungiziden Wirkstoff (II) ausgewählt aus der Gruppe Kupferhydroxid, Kupferoxid, Kupferoxychlorid-sulfat, Kupfersulfat, Oxine-Kupfer, Kupfer-bis-(3-phenylsalicylat), Kupfer-dihydrazinium-disulfat, Dikupferchlorid-trihydroxid und Trikupfer-dichlorid-dimethyldithiocarbamat.

in einer synergistisch wirksamen Menge.

2. Fungizide Mischung nach Anspruch 1, **dadurch gekennzeichnet, daß** sie ein Carbamat der Formel I.a, in der X für CH steht, enthält.

3. Fungizide Mischung nach Anspruch 1, **dadurch gekennzeichnet, daß** das Gewichtsverhältnis der Verbindung I. a, ihres Salzes oder Adduktes, zu dem Wirkstoff (II) 1:1 bis 1:1000 beträgt.

4. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II gemäß Anspruch 1 behandelt.

5. Verfahren nach Anspruch 3, **dadurch gekennzeichnet, daß** man die Verbindung I.a, eines ihrer Salze oder Addukte gemäß Anspruch 1 und den Wirkstoff (II) gemäß Anspruch 1 gleichzeitig, und zwar gemeinsam oder getrennt, oder nacheinander ausbringt.

6. Verfahren nach Anspruch 4, **dadurch gekennzeichnet, daß** man die Verbindung I.a, eines ihrer Salze oder Addukte gemäß Anspruch 1 in einer Menge von 0,01 bis 2,5 kg/ha aufwendet.

7. Verfahren nach den Ansprüchen 4 oder 5, **dadurch gekennzeichnet, daß** man den Wirkstoff (II) gemäß Anspruch 1 in einer Menge von 0,1 bis 10 kg/ha aufwendet.

8. Verwendung der Verbindung I.a, eines ihrer Salze oder Addukte gemäß Anspruch 1 zur Herstellung einer fungizid wirksamen synergistischen Mischung gemäß Anspruch 1.

9. Verwendung der Wirkstoffe (II) gemäß Anspruch 1 zur Herstellung einer fungizid wirksamen synergistischen Mischung gemäß Anspruch 1.

10. Mittel das in zwei Teilen konditioniert ist, wobei der eine Teil eine Verbindung der Formel I.a gemäß Anspruch 1 in einem festen oder flüssigen Träger enthält und der andere Teil einen Wirkstoff der Formel II gemäß Anspruch 1 in einem festen oder flüssigen Träger enthält.

## Claims

1. A fungicidal mixture comprising

a.1)a carbamate of the formula I.a,

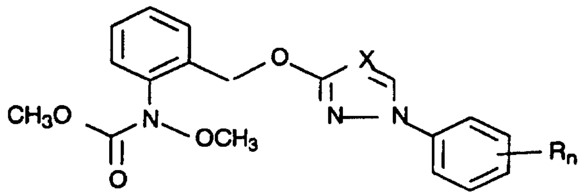

I.a

in which X is CH or N, n is 0, 1 or 2 and R is halogen, $C_1$-$C_4$-alkyl or $C_1$-$C_4$-haloalkyl, where the radicals R can be different if n is 2,
and

b) a copper-containing fungicidal active compound (II) from the group consisting of copper hydroxide, copper oxide, copper oxychloride sulfate, copper sulfate, oxine-copper, copper bis(3-phenylsalicylate), copper dihydrazinium disulfate, dicopper chloride trihydroxide and tricopper dichloride dimethyldithiocarbamate

in a synergistically active amount.

**2.** A fungicidal mixture as claimed in claim 1, which contains a carbamate of the formula I.a in which X is CH.

**3.** A fungicidal mixture as claimed in claim 1, wherein the weight ratio of the compound I.a, its salt or adduct to the active compound (II) is 1:1 to 1:1000.

**4.** A process for controlling harmful fungi, which comprises treating the harmful fungi, their habitat or the plants, seeds, soil, areas, materials or spaces to be kept free from them with the compound of the formula I, one of its salts or adducts as claimed in claim 1 and the compound of the formula II as claimed in claim 1.

**5.** A process as claimed in claim 3, wherein the compound I.a, one of its salts or adducts as claimed in claim 1 and the active compound (II) as claimed in claim 1 are applied simultaneously, to be precise jointly or separately, or in succession.

**6.** A process as claimed in claim 4, wherein the compound I.a, one of its salts or adducts as claimed in claim 1 is applied in an amount from 0.01 to 2.5 kg/ha.

**7.** A process as claimed in claims 4 or 5, wherein the active compound (II) as claimed in claim 1 is applied in an amount from 0.1 to 10 kg/ha.

**8.** The use of the compound I.a, one of its salts or adducts as claimed in claim 1 for the production of a fungicidally active synergistic mixture as claimed in claim 1.

**9.** The use of the active compound (II) as claimed in claim 1 for the production of a fungicidally active synergistic mixture as claimed in claim 1.

**10.** A composition, which is packaged in two parts, one part containing a compound of the formula I.a as claimed in claim 1 in a solid or liquid carrier and the other part containing an active compound of the formula II as claimed in claim 1 in a solid or liquid carrier.

## Revendications

**1.** Mélange fongicide contenant

a. 1) un carbamate répondant à la formule I.a

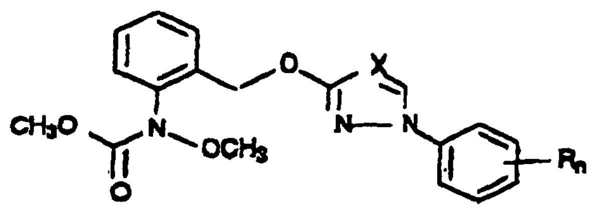

I.a

dans laquelle X représente un groupe CH et un atome d'azote, n représente 0, 1 ou 2, et R représente un atome d'halogène, un groupe alkyle en $C_1$ - $C_4$ et un groupe halogénalkyle en $C_1$ - $C_4$, les radicaux R pouvant être différents lorsque n représente 2,

et

b) une substance active fongicide cuprifère (II) choisie parmi le groupe comprenant de l'hydroxyde de cuivre, de l'oxyde de cuivre, du sulfate d'oxychlorure de cuivre, du sulfate de cuivre, de l'oxine-cuivre, du bis-(3-phénylsalicylate) de cuivre, du dihydrazinium-disulfate de cuivre, du trioxyde de chlorure de dicuivre et du diméthyldithiocarbamate de dichlorure de tricuivre,

en une quantité efficace du point de vue synergique.

**2.** Mélange fongicide selon la revendication 1, **caractérisé en ce qu'**il contient un carbamate répondant à la formule I.a dans laquelle X représente un groupe CH.

**3.** Mélange fongicide selon la revendication 1, **caractérisé en ce que** le rapport pondéral du composé I.a, de son sel ou de son adduit, à la substance active (II) s'élève de 1 : 1 à 1 : 1000.

**4.** Procédé pour lutter contre des champignons nuisibles, **caractérisé en ce qu'**on traite les champignons nuisibles, leur biotope ou encore les plantes, les semences, les sols, les surfaces, les matières où les espaces qui doivent en être préservés, avec le composé répondant à la formule I, avec un de ses sels ou de ses adduits selon la revendication 1 et avec le composé répondant la formule II selon la revendication 1.

**5.** Procédé selon la revendication 3, **caractérisé en ce qu'**on procède à l'épandage du composé I.a, d'un de ses sels ou de ses adduits selon la revendication 1, et de la substance active (II) selon la revendication 1, de manière simultanée, et en fait à l'état conjoint ou séparé, ou de manière successive.

**6.** Procédé selon la revendication 4, **caractérisé en ce qu'**on met en oeuvre le composé I.a, un de ses sels ou de ses adduits selon la revendication 1 en une quantité de 0,01 à 2,5 kg/ha.

**7.** Procédé selon la revendication 4 ou 5, **caractérisé en ce qu'**on met en oeuvre la substance active (II) selon la revendication 1 en une quantité de 0,1 à 10 kg/ha.

**8.** Utilisation du composé I.a, d'un de ses sels ou de ses adduits selon la revendication 1 pour la préparation d'un mélange synergique efficace du point de vue fongicide, selon la revendication 1.

**9.** Utilisation de la substance active (II) selon la revendication 1 pour la préparation d'un mélange synergique selon la revendication 1 efficace du point de vue fongicide.

**10.** Agent qui a été conditionné en deux parties, la première partie contenant un composé répondant à la formule I.a selon la revendication 1 dans un support solide ou liquide et l'autre partie contenant une substance active répondant à la formule II selon la revendication 1 dans un support solide ou liquide.